# FASCICULE DE BREVET EUROPEEN

(11) **EP 3 610 133 B1**
(45) Date de publication et mention de la délivrance du brevet: **29.12.2021**
(21) Numéro de dépôt: 18728683.6
(22) Date de dépôt: 10.04.2018
(51) Int. Cl.: F01D 5/18

(54) **AUBE DE TURBINE PRÉSENTANT UNE STRUCTURE AMÉLIORÉE**
TURBINENSCHAUFEL MIT VERBESSERTER STRUKTUR
TURBINE BLADE HAVING AN IMPROVED STRUCTURE

(30) Priorité: 10.04.2017 FR 1700390
(43) Date de publication de la demande: 19.02.2020
(73) Titulaire: Safran, 75015 Paris (FR)
(72) Inventeur: PAQUIN, Sylvain, 77550 Moissy-Cramayel Cedex (FR); CARIOU, Romain Pierre, 77550 Moissy-Cramayel Cedex (FR); FLAMME, Thomas Michel, 77550 Moissy-Cramayel Cedex (FR); ROLLINGER, Adrien Bernard Vincent, 77550 Moissy-Cramayel Cedex (FR)
(74) Mandataire: Cabinet Beau de Loménie
(86) Numéro de dépôt international: PCT/FR2018/000081
(87) Numéro de publication internationale: WO 2018/189434

(56) Documents cités:
- EP-A1- 0 562 944
- WO-A1-2016/151234
- US-A1- 2010 080 687

## Description

### DOMAINE DE L'INVENTION

La présente invention concerne le domaine des aubes de turbines à gaz haute pression aéronautique, plus particulièrement la structure interne de ces aubes, et une turbine à gaz comportant de telles aubes.

### ETAT DE LA TECHNIQUE ANTERIEURE

Les aubes mobiles d'une turbine à gaz d'un moteur d'avion, et notamment de la turbine haute-pression, sont soumises aux températures très élevées des gaz de combustion pendant le fonctionnement du moteur. Ces températures atteignent des valeurs largement supérieures à celles que peuvent supporter sans dommages les différentes pièces qui sont en contact avec ces gaz, ce qui a pour conséquence de limiter leur durée de vie.

Par ailleurs, une élévation de la température des gaz de la turbine haute-pression permet d'améliorer le rendement d'un moteur, donc le rapport entre la poussée du moteur et le poids d'un avion propulsé par ce moteur. Par conséquent, des efforts sont entrepris afin de réaliser des aubes de turbine qui peuvent résister à des températures de plus en plus élevées, et afin d'optimiser le refroidissement de ces aubes.

Il est ainsi connu de munir ces aubes de circuits de refroidissement visant à réduire la température de ces dernières. Grâce à de tels circuits, de l'air de refroidissement (ou air «froid»), qui est généralement introduit dans l'aube par son pied, traverse celle-ci en suivant un trajet formé par des cavités pratiquées dans l'épaisseur de l'aube avant d'être éjecté par des orifices s'ouvrant à la surface de l'aube.

De tels circuits de refroidissement sont dits « avancés » quand ils sont composés de plusieurs cavités indépendantes dans l'épaisseur de l'aube, ou quand certaines de ces cavités sont dédiées au refroidissement localisé. Ces cavités permettent de définir une aube compatible avec les exigences de performance des moteurs et de durée de vie des pièces. On peut par exemple mentionner comme exemple de circuit de refroidissement avancé le circuit de refroidissement tel que présenté dans EP 1741875 ou dans le document EP 0562944.

De tels circuits avancés présentent l'inconvénient d'engendrer une grande différence de température entre les parois externes de l'aube au contact de la veine et les parois au cœur de l'aube. Ces différences de températures importantes induisent des dilatations et des contraintes pouvant mettre en péril la tenue mécanique de l'aube en fonctionnement et ainsi impacter sa durée de vie. Les dilatations des parois dans le plan ortho-radial engendrent notamment des contraintes autour des zones de jonction entre le cœur de l'aube et les parois de l'aube pouvant entrainer une rupture.

Les solutions proposées pour répondre à ces problématiques consistent habituellement à augmenter l'épaisseur des différentes parois afin d'en améliorer la tenue. On comprend toutefois bien que cela pénalise les performances générales de l'aube.

### PRESENTATION DE L'INVENTION

La présente invention concerne une aube de turbine aéronautique telle que définie dans la revendication 1, s'étendant dans la direction radiale depuis un pied d'aube jusqu'à une cloison supérieure, ladite aube comprenant une pluralité de cavités internes définissant au moins un circuit de refroidissement, lesdites cavités internes étant chacune délimitées par des parois parmi des parois internes, une paroi d'intrados, une paroi d'extrados, le pied d'aube et la cloison supérieure, ladite aube étant caractérisée en ce qu'elle comprend au moins une première cavité d'intrados et une première cavité d'extrados chacune adjacente à une première cavité traversante et à une deuxième cavité traversante, la première cavité d'extrados étant adjacente à la paroi d'extrados, la première cavité d'intrados étant adjacente à la paroi d'intrados, chacune desdites première et deuxième cavités traversantes s'étendant depuis la paroi d'intrados jusqu'à la paroi d'extrados, la deuxième cavité traversante comprenant une première paroi interne s'étendant depuis la paroi d'extrados jusqu'à la première cavité traversante, et une deuxième paroi interne s'étendant depuis la paroi d'intrados jusqu'à la première cavité traversante, lesdites première paroi interne et deuxième paroi interne étant disjointes.

La deuxième cavité traversante comprend une portion s'étendant entre la première cavité d'intrados et la première cavité d'extrados.

Selon un mode de réalisation, la première cavité d'intrados est reliée fluidiquement à la première cavité traversante et la première cavité d'extrados est reliée fluidiquement à la deuxième cavité traversante.

L'aube comprend une deuxième cavité d'intrados, une deuxième cavité d'extrados et une troisième cavité traversante, dans laquelle la troisième cavité traversante s'étend depuis la paroi d'intrados jusqu'à la paroi d'extrados , la deuxième cavité d'intrados et la deuxième cavité d'extrados sont chacune adjacente à la deuxième cavité traversante et à la troisième cavité traversante, la deuxième cavité d'extrados est adjacente à la paroi d'extrados, la deuxième cavité d'intrados est adjacente à la paroi d'intrados , et dans laquelle la troisième cavité traversante comprend une troisième paroi interne s'étendant depuis la paroi d'extrados jusqu'à la deuxième cavité traversante, et une quatrième paroi interne s'étendant depuis la paroi d'intrados jusqu'à la deuxième cavité traversante, lesdites troisième paroi interne et quatrième paroi interne étant disjointes.

La troisième cavité traversante comprend alors typiquement une portion s'étendant entre la deuxième cavité d'intrados et la deuxième cavité d'extrados.

La deuxième cavité d'intrados est reliée fluidiquement à la première cavité extrados, et la deuxième cavité d'extrados est reliée fluidiquement à la troisième cavité traversante.

Selon un mode de réalisation, l'aube comprend une troisième cavité d'intrados, une troisième cavité d'extrados et une quatrième cavité traversante, dans laquelle la quatrième cavité traversante s'étend depuis la paroi d'intrados jusqu'à la paroi d'extrados, la troisième cavité d'intrados et la troisième cavité d'extrados sont chacune adjacente à la troisième cavité traversante et à la quatrième cavité traversante, la troisième cavité d'extrados est adjacente à la paroi d'extrados, la troisième cavité d'intrados est adjacente à la paroi d'intrados, et dans laquelle la troisième cavité traversante comprend une cinquième paroi interne s'étendant depuis la paroi d'extrados jusqu'à la quatrième cavité traversante, et une sixième paroi interne s'étendant depuis la paroi d'intrados jusqu'à la quatrième cavité traversante, lesdites cinquième paroi interne et sixième paroi interne étant disjointes.

Tout ou partie des cavités traversantes peuvent comprendre au moins une poutre de renfort disposée au sein de l'une desdites cavités traversantes et reliant le pied d'aube à la cloison supérieure, ladite poutre de renfort étant disjointe des parois internes, de la paroi d'intrados et de la paroi d'extrados.

Le présent exposé concerne également une turbine à gaz comportant des aubes du présent exposé.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un exemple de vue en perspective d'une aube de turbine aéronautique,
- la figure 2 représente un exemple de vue en coupe d'une telle aube,
- la figure 3 représente un autre exemple de vue en coupe d'une telle aube.

Sur l'ensemble des figures, les éléments en commun sont repérés par des références numériques identiques.

### DESCRIPTION DETAILLEE D'EXEMPLES DE REALISATION

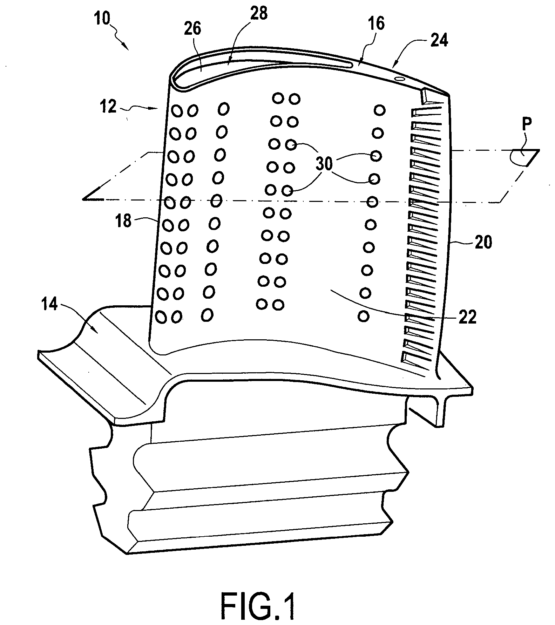

On décrit ci-après l'invention en références aux figures 1 à 3.

La figure 1 illustre une aube mobile 10, par exemple métallique, d'une turbine haute-pression de turbomachine. Bien entendu, la présente invention peut également s'appliquer à d'autres aubes mobiles ou fixes de la turbomachine.

L'aube 10 comporte une surface aérodynamique 12 (ou pale) qui s'étend radialement entre un pied d'aube 14 et une tête d'aube 16.

Le pied d'aube 14 est adapté pour être monté sur un disque du rotor de la turbine haute-pression, la tête d'aube 16 étant opposée radialement au pied d'aube 14.

La surface aérodynamique 12 présente quatre zones distinctes : un bord d'attaque 18 disposé en regard de l'écoulement des gaz chauds issus de la chambre de combustion de la turbomachine, un bord de fuite 20 opposé au bord d'attaque 18, une paroi d'intrados 22 et une paroi d'extrados 24, parois d'intrados 22 et d'extrados 24 reliant le bord d'attaque 18 au bord de fuite 20.

Au niveau de la tête d'aube 16, la surface aérodynamique 12 de l'aube est fermée par une paroi transversale 26. Par ailleurs, la surface aérodynamique 12 s'étend radialement légèrement au-delà de cette paroi transversale 26 de façon à former une cuvette 28, dénommée ci-après baignoire de l'aube. Cette baignoire 28 possède donc un fond formé par la paroi transversale 26, un bord formé par la surface aérodynamique 12 et elle est ouverte vers la tête d'aube 16. Des orifices 30 sont typiquement formés dans la paroi d'intrados 22 et/ou dans la paroi d'extrados 24, de manière à permettre une admission et/ou un refoulement d'air entre des cavités internes à l'aube et le milieu extérieur.

L'aube 10 comprend typiquement un ou plusieurs circuits de refroidissement formés par la structure interne de l'aube 10 que l'on décrit ci-après.

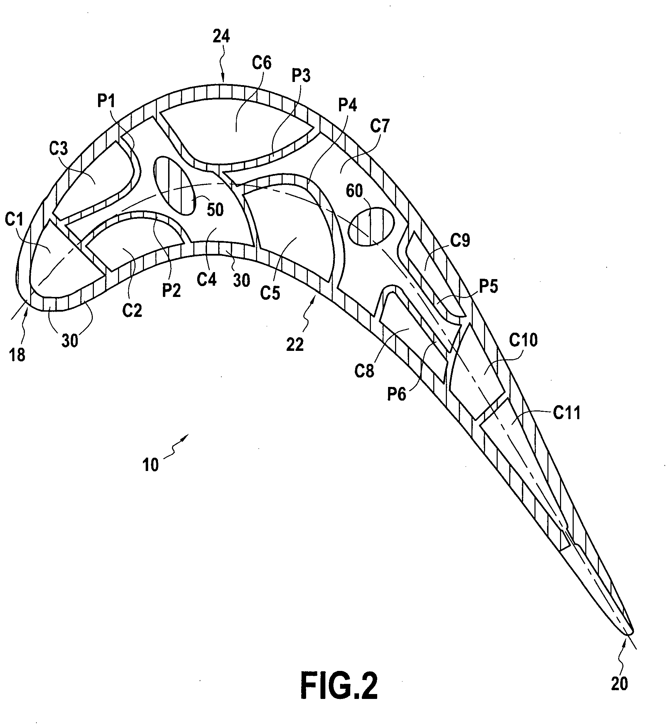

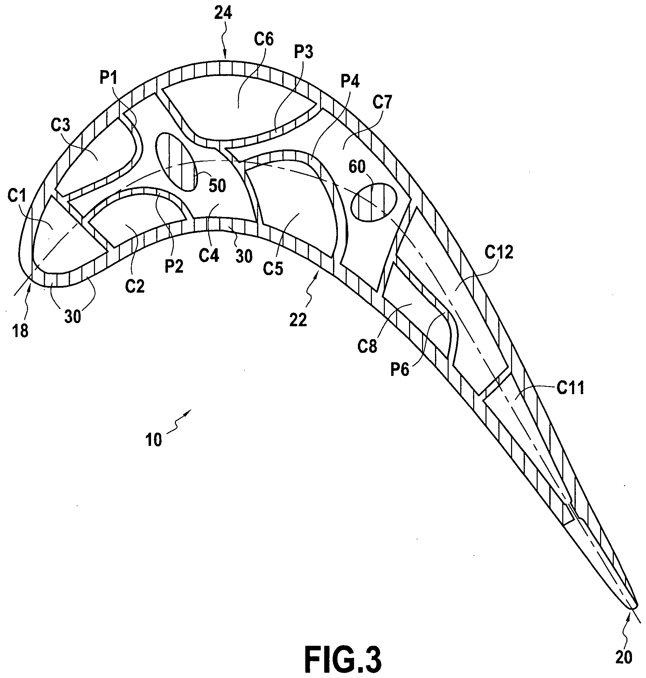

Les figures 2 et 3 sont deux vues en coupe de deux variantes d'une aube telle que présentée sur la figure 1, par exemple selon le plan de coupe P représenté sur la figure 1.

Comme on le voit sur ces figures, l'aube 10 est creuse, et son volume interne est composé d'une pluralité de cavités internes séparées par des parois internes.

Dans les exemples représentés sur la figure 2, l'aube 10 comprend 11 cavités internes désignées par les références C1 à C11.

Comme on le voit sur la figure 2, pour l'exemple représenté, une partie de ces cavités internes, en l'occurrence les cavités internes C1, C4, C7, C10 et C11 s'étendent entre la paroi d'intrados 22 et la paroi d'extrados 24 ; on les désigne ainsi comme étant des cavités internes traversantes. Les cavités internes C1, C4, C7, C10 et C11 sont désignés respectivement comme première, deuxième, troisième, quatrième et cinquième cavités internes traversantes. La première cavité traversante C1 forme le bord d'attaque 18 de l'aube 10, tandis que la cinquième cavité traversante C11 est positionnée dans le prolongement de la cavité interne C10, et forme le bord de fuite 20 de l'aube 10.

Les cavités internes restantes, à savoir les cavités internes C2, C3, C5, C6, C8 et C9 ne sont pas traversantes, c'est-à-dire qu'elles sont chacune adjacente à l'une des parois d'intrados 22 ou d'extrados 24, mais ne s'étendent pas jusqu'à l'autre des parois d'intrados 22 ou d'extrados 24.

Parmi ces cavités internes non traversantes, les cavités internes C3, C6 et C9 sont adjacentes à la paroi d'extrados 24 ; on les désigne ainsi respectivement comme première, deuxième et troisième cavités d'extrados. Les cavités internes C2, C5 et C8 sont quant à elles adjacentes à la paroi d'intrados 22 ; on les désigne ainsi respectivement comme première, deuxième et troisième cavités d'intrados.

On comprend bien qu'un tel exemple de structure interne de l'aube 10 est uniquement illustratif, et que l'invention présentée pourra s'appliquer quelle que soit la structure interne de l'aube 10.

Comme indiqué en préambule de la présente demande de brevet, l'une des problématiques majeures pour la conception d'une telle aube 10 concerne la tenue en fonctionnement notamment en raison des écarts de dilatations se produisant dans les différentes régions de l'aube 10, et plus précisément des contraintes qui en résultent dans un plan ortho-radial de l'aube 10.

Afin de répondre à ces problématiques, le présent exposé propose une structure particulière pour les parois délimitant les cavités traversantes et les cavités d'intrados et d'extrados.

Comme on le voit sur la figure 2, les deuxième, troisième et quatrième cavités interne traversantes C4, C7 et C10 présentent une structure spécifique, de sorte que leurs parois s'étendent jusqu'à une autre cavité interne traversante.

Plus précisément, en considérant la deuxième cavité interne traversante C4, cette dernière est délimitée notamment par une première paroi interne P1 qui s'étend depuis la paroi d'extrados 24 jusqu'à la première cavité traversante C1, et par une deuxième paroi interne P2 qui s'étend depuis la paroi d'intrados 22 jusqu'à la première cavité traversante C1. La première paroi interne P1 et la deuxième paroi interne P2 sont disjointes. Une telle structure permet à la deuxième cavité traversante C4 de s'étendre entre la première cavité d'intrados C2 et la première cavité d'extrados C3, de sorte que le fluide, qui s'est échauffé à la traversée de la deuxième cavité intrados C5 puis de la première cavité extrados C3, circule dans la deuxième cavité traversante C4 et baigne les parois de la première cavité d'intrados C2 et de la première cavité d'extrados C3, et réduise ainsi le gradient thermique entre les parois externes de l'aube 10 (c'est-à-dire la paroi d'intrados 22 et la paroi d'extrados 24) et les parois internes (ici la première paroi interne P1 et la deuxième paroi interne P2). De plus, disjoindre la première paroi interne P1 et la deuxième paroi interne P2 permet de réduire les contraintes autour de leurs jonctions respectives avec les parois d'extrados et d'intrados par exemple par rapport à une structure dans laquelle ces parois internes P1 et P2 seraient confondues.

La troisième cavité traversante C7 présente une structure sensiblement distincte. Cette troisième cavité traversante C7 est délimitée notamment par une troisième paroi interne P3 qui s'étend depuis la paroi d'extrados 24 jusqu'à la deuxième cavité traversante C4, par une quatrième paroi interne P4 qui s'étend depuis la paroi d'intrados 22 jusqu'à la deuxième cavité traversante C4, la troisième paroi interne P3 et la quatrième paroi interne P4 étant disjointes, et est également délimitée par une cinquième paroi interne P5 qui s'étend depuis la paroi d'extrados 24 jusqu'à la quatrième cavité traversante C10, par une sixième paroi interne P6 qui s'étend qui s'étend depuis la paroi d'intrados 22 jusqu'à la quatrième cavité traversante C10, la cinquième paroi interne P5 et la sixième paroi interne P6 étant disjointes et définissant respectivement la troisième cavité d'extrados C9 avec la paroi d'extrados 24, et la troisième cavité d'intrados C8 avec la paroi d'intrados 22. Une telle structure permet à la troisième cavité traversante C7 de s'étendre entre la deuxième cavité d'intrados C5 et la deuxième cavité d'extrados C6 d'une part et entre la troisième cavité d'intrados C8 et la troisième cavité d'extrados C9 d'autre part, de sorte que le fluide, qui s'est échauffé à la traversée de la troisième cavité intrados C8 puis de la deuxième cavité extrados C6, circule dans la troisième cavité traversante C7 et baigne les parois des deuxième et troisième cavités intrados C5 et C8 et des deuxième et troisième cavité d'extrados C6 et C9, et réduise ainsi le gradient thermique entre les parois externes de l'aube 10 (c'est-à-dire la paroi d'intrados 22 et la paroi d'extrados 24) et les parois internes (ici la troisième paroi interne P3, la quatrième paroi interne P4, cinquième paroi interne P5 et la sixième paroi interne P6. De plus, disjoindre les parois internes P3 et P4 d'une part, et les parois internes P5 et P6 d'autre part permet de réduire les contraintes autour de leurs jonctions respectives avec les parois d'extrados et d'intrados par rapport à une structure dans laquelle ces parois seraient confondues deux à deux.

Chaque cavité d'intrados et d'extrados est ainsi adjacente à deux cavités traversantes, et n'est pas adjacente à une autre cavité d'intrados ou d'extrados. Par adjacentes, on entend que les cavités considérées ont au moins une paroi en commun.

Une aube 10 présentant une structure telle que représentée sur la figure 2 est ainsi avantageuse notamment en ce qu'elle permet de réduire le gradient thermique entre les différentes parois internes et externes à l'aube 10, et ainsi de limiter l'écart de dilatation entre les parois qui est un facteur important pour la génération d'efforts lors du fonctionnement. Par ailleurs, le fait de réaliser une circulation d'air entre les différentes parois internes, notamment entre la première paroi interne P1 et la deuxième paroi interne P2 via la deuxième cavité traversante C4 permet de contrôler la température de ces parois internes, et de les maintenir dans une plage de température pour laquelle les matériaux considérés ont des propriétés mécaniques optimales. Il en est de même pour les autres parois internes P3 à P6.

Le sens de circulation du fluide dans les différentes cavités de l'aube formant le système de refroidissement peut être défini selon plusieurs configurations, la géométrie des parois internes P1 à P6 n'étant pas contraignante. A titre d'exemple, on peut citer une configuration dans laquelle chaque cavité d'intrados est reliée fluidiquement à au moins une cavité traversante, et chaque cavité d'extrados est reliée fluidiquement à au moins une cavité traversante. Chaque cavité d'intrados et d'extrados peut également être reliée fluidiquement à une autre cavité d'intrados ou d'extrados. Tout ou partie des cavités d'intrados, d'extrados et traversantes peuvent également être reliées aux orifices 30 aménagés dans la paroi d'intrados 22 et /ou dans la paroi d'extrados 24 de l'aube 10.

Par ailleurs, une aube 10 comprenant des parois internes P1 à P6 telles que décrites présente une souplesse accrue par rapport à une aube 10 présentant des parois internes s'étendant linéairement depuis la paroi d'intrados 22 jusqu'à la paroi d'extrados 24 comme par exemple dans le cas présenté dans la demande de brevet EP 1741875. En effet, si on considère une aube 10 telle que représentée sur les figures 2 et 3, on constate qu'elle comprend un nombre limité de parois transversales (i.e. des parois s'étendant sensiblement linéairement entre la paroi d'intrados 22 et la paroi d'extrados 24) par rapport à l'aube présentée dans la demande de brevet EP 1741875 et comprenant un nombre équivalent de cavités internes.

Dans l'exemple représenté sur la figure 3, la cinquième paroi interne P5 est supprimée, de sorte que les cavités C9 et C10 sont fusionnées pour former une cavité unique C12. Un tel mode de réalisation permet de réaliser un refroidissement direct de la paroi d'extrados 24 adjacente au bord de fuite 20 tout en conservant une structure mécaniquement souple en évitant de former une paroi transversale s'étendant entre la paroi d'intrados 22 et la paroi d'extrados 24 au sein de la cavité C12. Un tel mode de réalisation est notamment adapté pour des cas dans lesquels la température du fluide au de la veine dans laquelle évolue l'aube présente un écart important par rapport à la température du fluide de refroidissement circulant au sein de l'aube 10.

Dans les exemples représentés sur les figures 2 et 3, l'aube 10 comprend des poutres de renfort s'étendant au sein de cavités traversantes de l'aube 10, depuis le pied de l'aube 10 jusqu'à sa cloison supérieure, typiquement la paroi transversale 26 définissant le fond de la baignoire 28 de l'aube 10.

Dans les exemples représentés sur les figures 2 et 3, l'aube 10 comprend ainsi deux poutres de renfort 50 et 60 disposées respectivement au sein de la deuxième cavité traversante C4 et de la troisième cavité traversante C7.

Chacune de ces poutres de renfort 50 et 60 s'étend depuis le pied de l'aube 10 jusqu'à sa cloison supérieure, et est disposée au sein d'une cavité traversante, tout en demeurant disjoint de la paroi d'intrados 22, de la paroi d'extrados 24 et des parois internes délimitant les cavités traversantes.

Les poutres de renfort 50 et 60 sont ainsi chacune situées entièrement dans une veine de refroidissement de l'aube 10, et sont donc à la température de l'air circulant dans la veine de refroidissement considérée, et ne sont ainsi pas impactées directement par la température de la paroi d'intrados 22 et de la paroi d'extrados 24. Le pied de l'aube est en effet situé en dessous de la veine d'air, et fonctionne à la température de l'air de refroidissement de l'aube 10.

La présence de telles poutres de renfort 50 et 60 permet ainsi de retenir l'effort centrifuge sans engendrer d'efforts dans le plan ortho-radial. Dans la mesure où les poutres de renfort 50 et 60 retiennent l'effort centrifuge, les autres parois de l'aube 10 peuvent être amincies, ce qui permet ainsi de minimiser voire d'annuler l'impact des poutres de renfort sur le poids de l'aube 10 et sur son circuit de refroidissement.

Les poutres de renfort 50 et 60 sont typiquement centrées sur une ligne médiane de l'aube 10 selon une vue en coupe dans la direction radiale, comme visible sur les figures 2 et 3, ce qui améliore la reprise de l'effort centrifuge par les poutres de renfort 50 et 60.

Le nombre et l'emplacement des poutres de renfort peuvent varier selon la géométrie de l'aube 10 et selon les conditions dans lesquelles elle est destinée à évoluer. On comprend bien en effet que les modes de réalisation représentés sur les figure 2 et 3 qui comprennent chacun deux poutres de renfort n'est pas limitatif, et que l'aube 10 peut comporter une unique poutre de renfort, ou encore 3, 4, 5 ou plus de 5 poutres de renfort disposées dans des cavités traversantes distinctes ou plusieurs poutres de renfort pouvant être disposées au sein d'une même cavité traversante.

Les poutres de renfort peuvent être pleines ou creuses. Les figures 2 et 3 représentent chacune un mode de réalisation dans lequel les poutres de renfort 50 et 60 sont pleines.

Dans le cas où les poutres de renfort sont creuses, elles peuvent présenter des perçages prenant la forme de fentes et/ou de trous permettant ainsi de réaliser une circulation d'air au sein des poutres de renfort, par exemple pour définir un flux de fluide de refroidissement devant être acheminé vers une zone critique de l'aube 10 dans la mesure où un tel flux est isolé thermiquement par rapport à la paroi d'intrados 22 et à la paroi d'extrados 24.

Les poutres de renfort présentent typiquement une section circulaire, ovale ou ovoïde, étant entendu que dans le cas d'une aube 10 présentant plusieurs poutres de renfort, celles-ci peuvent présenter des géométries distinctes. Les poutres de renfort peuvent par ailleurs présenter une section constante ou variable sur la hauteur de l'aube 10.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, les nombres de circuits de refroidissement et de cavités composant chacun de ces circuits ne sont pas limités à ceux présentés dans cet exemple. Par conséquent, la description et les dessins doivent être considérés dans un sens illustratif plutôt que restrictif.

## Revendications

1. Aube (10) de turbine aéronautique s'étendant dans la direction radiale depuis un pied d'aube (14) jusqu'à une cloison supérieure (26), ladite aube (10) comprenant une pluralité de cavités internes définissant au moins un circuit de refroidissement, lesdites cavités internes étant chacune délimitées par des parois parmi des parois internes, une paroi d'intrados (22), une paroi d'extrados (24), le pied d'aube (14) et la cloison supérieure (26),
ladite aube (10) comprenant au moins une première cavité d'intrados (C2) et une première cavité d'extrados (C3) chacune adjacente à une première cavité traversante (C1) et à une deuxième cavité traversante (C4), la première cavité d'extrados (C3) étant adjacente à la paroi d'extrados (24), la première cavité d'intrados (C2) étant adjacente à la paroi d'intrados (22), chacune desdites première et deuxième cavités traversantes (C1, C4) s'étendant depuis la paroi d'intrados (22) jusqu'à la paroi d'extrados (24),
la deuxième cavité traversante (C4) comprenant une première paroi interne (P1) s'étendant depuis la paroi d'extrados (24) jusqu'à la première cavité traversante (C1), et une deuxième paroi interne (P2) s'étendant depuis la paroi d'intrados (22) jusqu'à la première cavité traversante (C1), lesdites première paroi interne (P1) et deuxième paroi interne (P2) étant disjointes,
ladite aube (10) étant **caractérisée en ce qu'**elle comprend en outre une deuxième cavité d'intrados (C5), une deuxième cavité d'extrados (C6) et une troisième cavité traversante (C7),
dans laquelle la deuxième cavité traversante (C4) comprend une portion s'étendant entre la première cavité d'intrados (C2) et la première cavité d'extrados (C3), la deuxième cavité d'intrados (C5) est reliée fluidiquement à la première cavité d'extrados (C3), et la deuxième cavité d'extrados (C6) est reliée fluidiquement à la troisième cavité traversante (C7), la troisième cavité traversante (C7) s'étend depuis la paroi d'intrados (22) jusqu'à la paroi d'extrados (24), la deuxième cavité d'intrados (C5) et la deuxième cavité d'extrados (C6) sont chacune adjacente à la deuxième cavité traversante (C4) et à la troisième cavité traversante (C7), la deuxième cavité d'extrados (C6) est adjacente à la paroi d'extrados (24), la deuxième cavité d'intrados (C5) est adjacente à la paroi d'intrados (22), et dans laquelle la troisième cavité traversante (C7) comprend une troisième paroi interne (P3) s'étendant depuis la paroi d'extrados (24) jusqu'à la deuxième cavité traversante (C4), et une quatrième paroi interne (P4) s'étendant depuis la paroi d'intrados (22) jusqu'à la deuxième cavité traversante (C4) , lesdites troisième paroi interne (P3) et quatrième paroi interne (P4) étant disjointes.

2. Aube (10) selon la revendication 1, dans laquelle la première cavité d'intrados (C2) est reliée fluidiquement à la première cavité traversante (C1), et la première cavité d'extrados (C3) est reliée fluidiquement à la deuxième cavité traversante (C4).

3. Aube (10) selon l'une des revendication 1 ou 2, dans laquelle la troisième cavité traversante (C7) comprend une portion s'étendant entre la deuxième cavité d'intrados (C5) et la deuxième cavité d'extrados (C6).

4. Aube (10) selon l'une des revendications 1 à 3, comprenant une troisième cavité d'intrados (C8), une troisième cavité d'extrados (C9) et une quatrième cavité traversante (C10),
dans laquelle la quatrième cavité traversante (C10) s'étend depuis la paroi d'intrados (22) jusqu'à la paroi d'extrados (24), la troisième cavité d'intrados (C8) et la troisième cavité d'extrados (C9) sont chacune adjacente à la troisième cavité traversante (C7) et à la quatrième cavité traversante (C10), la troisième cavité d'extrados (C9) est adjacente à la paroi d'extrados (24), la troisième cavité d'intrados (C8) est adjacente à la paroi d'intrados (22), et dans laquelle la troisième cavité traversante (C7) comprend une cinquième paroi interne (P5) s'étendant depuis la paroi d'extrados (24) jusqu'à la quatrième cavité traversante (C10), et une sixième paroi interne (P6) s'étendant depuis la paroi d'intrados (22) jusqu'à la quatrième cavité traversante (C10), lesdites cinquième paroi interne (P5) et sixième paroi interne (P6) étant disjointes.

5. Aube (10) selon l'une des revendications précédentes, dans laquelle au moins une des cavités traversantes (C4, C7) comprend au moins une poutre de renfort (50, 60) disposée au sein de l'une desdites cavités traversantes (C4, C7), et reliant le pied d'aube (14) à la cloison supérieure (26), ladite poutre de renfort (50, 60) étant disjointe des parois internes, de la paroi d'intrados (22) et de la paroi d'extrados (24).

6. Turbine à gaz comportant des aubes (10) selon l'une quelconque des revendications 1 à 5.

## Patentansprüche

1. Schaufel (10) einer Flugzeugturbine, welche sich in radialer Richtung von einem Schaufelfuß (14) zu einer oberen Trennwand (26) erstreckt, wobei die Schaufel (10) eine Vielzahl von inneren Hohlräumen umfasst, die mindestens einen Kühlkreislauf definieren, wobei die inneren Hohlräume jeweils durch Wände, darunter innere Wände, eine druckseitige Wand (22), eine saugseitige Wand (24), den Schaufelfuß (14) und die obere Trennwand (26), begrenzt sind,
wobei die Schaufel (10) mindestens einen ersten druckseitigen Hohlraum (C2) und einen ersten saugseitigen Hohlraum (C3) umfasst, die jeweils an einen ersten durchgehenden Hohlraum (C1) und einen zweiten durchgehenden Hohlraum (C4) angrenzen, wobei der erste saugseitige Hohlraum (C3) an die saugseitige Wand (24) angrenzt, wobei der erste druckseitige Hohlraum (C2) an die druckseitige Wand (22) angrenzt, wobei sich der erste und der zweite durchgehende Hohlraum (C1, C4) jeweils von der druckseitigen Wand (22) bis zu der saugseitigen Wand (24) erstrecken,
wobei der zweite durchgehende Hohlraum (C4) eine erste innere Wand (P1) umfasst, die sich von der saugseitigen Wand (24) zu dem ersten durchgehenden Hohlraum (C1) erstreckt, und eine zweite innere Wand (P2) umfasst, die sich von der druckseitigen Wand (22) bis zu dem ersten durchgehenden Hohlraum (C1) erstreckt, wobei die erste innere Wand (P1) und die zweite innere Wand (P2) getrennt sind,
wobei die Schaufel (10) **dadurch gekennzeichnet ist, dass** sie weiter einen zweiten druckseitigen Hohlraum (C5), einen zweiten saugseitigen Hohlraum (C6) und einen dritten durchgehenden Hohlraum (C7) umfasst,
wobei der zweite durchgehende Hohlraum (C4) einen Abschnitt umfasst, der sich zwischen dem ersten druckseitigen Hohlraum (C2) und dem ersten saugseitigen Hohlraum (C3) erstreckt, wobei der zweite druckseitige Hohlraum (C5) mit dem ersten saugseitigen Hohlraum (C3) in Fluidverbindung steht und der zweite saugseitige Hohlraum (C6) mit dem dritten durchgehenden Hohlraum (C7) in Fluidverbindung steht, wobei sich der dritte durchgehende Hohlraum (C7) von der druckseitigen Wand (22) bis zu der saugseitigen Wand (24) erstreckt, wobei der zweite druckseitige Hohlraum (C5) und der zweite saugseitige Hohlraum (C6) jeweils an den zweiten durchgehenden Hohlraum (C4) und den dritten durchgehenden Hohlraum (C7) angrenzen, wobei der zweite saugseitige Hohlraum (C6) an die saugseitige Wand (24) angrenzt, wobei der zweite druckseitige Hohlraum (C5) an die druckseitige Wand (22) angrenzt und wobei der dritte durchgehende Hohlraum (C7) eine dritte innere Wand (P3) umfasst, die sich von der saugseitigen Wand (24) bis zu dem zweiten durchgehenden Hohlraum (C4) erstreckt, und eine vierte innere Wand (P4) umfasst, die sich von der druckseitigen Wand (22) bis zu dem zweiten durchgehenden Hohlraum (C4) erstreckt, wobei die dritte innere Wand (P3) und die vierte innere Wand (P4) getrennt sind.

2. Schaufel (10) nach Anspruch 1, wobei der erste druckseitige Hohlraum (C2) mit dem ersten durchgehenden Hohlraum (C1) in Fluidverbindung steht und der erste saugseitige Hohlraum (C3) mit dem zweiten durchgehenden Hohlraum (C4) in Fluidverbindung steht.

3. Schaufel (10) nach einem der Ansprüche 1 oder 2, wobei der dritte durchgehende Hohlraum (C7) einen Abschnitt umfasst, der sich zwischen dem zweiten druckseitigen Hohlraum (C5) und dem zweiten saugseitigen Hohlraum (C6) erstreckt.

4. Schaufel (10) nach einem der Ansprüche 1 bis 3, umfassend einen dritten druckseitigen Hohlraum (C8), einen dritten saugseitigen Hohlraum (C9) und einen vierten durchgehenden Hohlraum (C10),
wobei sich der vierte durchgehende Hohlraum (C10) von der druckseitigen Wand (22) bis zu der saugseitigen Wand (24) erstreckt, wobei der dritte druckseitige Hohlraum (C8) und der dritte saugseitige Hohlraum (C9) jeweils an den dritten durchgehenden Hohlraum (C7) und den vierten durchgehenden Hohlraum (C10) angrenzen, wobei der dritte saugseitige Hohlraum (C9) an die saugseitige Wand (24) angrenzt, wobei der dritte druckseitige Hohlraum (C8) an die druckseitige Wand (22) angrenzt und wobei der dritte durchgehende Hohlraum (C7) eine fünfte innere Wand (P5) umfasst, die sich von der saugseitigen Wand (24) bis zu dem vierten durchgehenden Hohlraum (C10) erstreckt, und eine sechste innere Wand (P6) umfasst, die sich von der druckseitigen Wand (22) bis zu dem vierten durchgehenden Hohlraum (C10) erstreckt, wobei die fünfte innere Wand (P5) und die sechste innere Wand (P6) getrennt sind.

5. Schaufel (10) nach einem der vorstehenden Ansprüche, wobei mindestens einer der durchgehenden Hohlräume (C4, C7) mindestens einen Verstärkungsträger (50, 60) umfasst, der in einem der durchgehenden Hohlräume (C4, C7) angeordnet ist und den Schaufelfuß (14) mit der oberen Trennwand (26) verbindet, wobei der Verstärkungsträger (50, 60) von den inneren Wänden, von der druckseitigen Wand (22) und von der saugseitigen Wand (24) getrennt ist.

6. Gasturbine mit Schaufeln (10) nach einem der Ansprüche 1 bis 5.

## Claims

1. An aviation turbine blade (10) extending in the radial direction from a blade root (14) as far as an upper partition wall (26), said blade (10) comprising a plurality of inner cavities defining at least one cooling circuit, each of said inner cavities being defined by walls among inner walls, a lower surface wall (22), an upper surface wall (24), a blade root (14) and the upper partition wall (26),
said blade (10) comprising at least a first lower surface cavity (C2) and a first upper surface cavity (C3) each adjacent to a first through-cavity (C1) and to a second through-cavity (C4), the first upper surface cavity (C3) being adjacent to the upper surface wall (24), the first lower surface wall (C2) being adjacent to the lower surface wall (22), each of said first and second through-cavities (C1, C4) extending from the lower surface wall (22) as far as the upper surface wall (24),
the second through-cavity (C4) comprising a first inner wall (P1) extending from the upper surface wall (24) as far as the first through-cavity (C1), and a second inner wall (P2) extending from the lower surface wall (22) as far as the first through-cavity (C1), said first inner wall (P1) and second inner wall (P2) not being connected,
said blade being **characterized in that** it comprises a second lower surface cavity (C5), a second upper surface cavity (C6) and a third through-cavity (C7),
wherein the second through-cavity (C4) comprises a portion extending between the first lower surface cavity (C2) and the first upper surface cavity (C3), the second lower surface cavity (C5) is fluidly connected to the first upper surface cavity (C3), and the second upper surface cavity (C6) is fluidly connected to the third through-cavity (C7), the third through-cavity (C7) extends from the lower surface wall (22) as far as the upper surface wall (24), each of the second lower surface cavity (C5) and the second upper surface cavity (C6) is adjacent to the second through-cavity (C4) and to the third through-cavity (C7),
the second upper surface cavity (C6) is adjacent to the upper surface wall (24), the second lower surface cavity (C5) is adjacent to the lower surface wall (22) and wherein the third through-cavity (C7) comprises a third inner wall (P3) extending from the upper surface wall (24) as far as the second through-cavity (C4), and a fourth inner wall (P4) extending from the lower surface wall (22) as far as the second through-cavity (C4), said third inner wall (P3) and fourth inner wall (P4) not being connected.

2. The blade (10) according to claim 1, wherein the first lower surface cavity (C2) is fluidly connected to the first through-cavity (C1), and the first upper surface cavity (C3) is fluidly connected to the second through-cavity (C4).

3. The blade (10) according to any one of claims 1 or 2, wherein the third through-cavity (C7) comprises a portion extending between the second lower surface cavity (C5) and the second upper surface cavity (C6).

4. The blade (10) according to one of claims 1 to 3, comprising a third lower surface cavity (C8), a third upper surface cavity (C9) and a fourth through-cavity (C10),
wherein the fourth through-cavity (C10) extends from the lower surface wall (22) as far as the upper surface wall (24), each of the third lower surface cavity (C8) and the third upper surface cavity (C9) is adjacent to the third through-cavity (C7) and to the fourth through-cavity (C10), the third upper surface cavity (C9) is adjacent to the upper surface wall (24), the third lower surface cavity (C8) is adjacent to the lower surface wall (22), and wherein the third through-cavity (C7) comprises a fifth inner wall (P5) extending from the upper surface wall (24) as far as the fourth through-cavity (C10), and a sixth inner wall (P6) extending from the lower surface wall (22) as far as the fourth through-cavity (C10), said fifth inner wall (P5) and sixth inner wall (P6) not being connected.

5. The blade (10) according to one of the preceding claims, wherein at least one of the through-cavities (C4, C7) comprises at least one reinforcing beam (50, 60) disposed inside one of said through-cavities (C4, C7), and connecting the blade root (14) to the upper partition wall (26), said reinforcing beam (50, 60) not being connected to the inner walls, the lower surface wall (22) and the upper surface wall (24).

6. A gas turbine including blades (10) according to any one of claims 1 to 5.
